# EUROPÄISCHE PATENTSCHRIFT

(11) **EP 0 349 819 B1**
(45) Veröffentlichungstag und Bekanntmachung des Hinweises auf die Patenterteilung: **22.12.1993**
(21) Anmeldenummer: 89111118.9
(22) Anmeldetag: 19.06.1989
(51) Int. Cl.: G06F 15/80

(54) **In integrierter Schaltungstechnik ausgeführtes digitales neuronales Netz**
Digital neural network integrated circuit
Réseau neuronal numérique en forme de circuit intégré

(30) Priorität: 05.07.1988 DE 3822757
(43) Veröffentlichungstag der Anmeldung: 10.01.1990
(73) Patentinhaber: SIEMENS AKTIENGESELLSCHAFT, 80333 München (DE)
(72) Erfinder: Knauer, Karl, Dr., D-8018 Grafing (DE); Ramacher, Ulrich, Dr., D-8000 München 90 (DE); Pandel, Jürgen, Dr., D-8152 Feldkirchen-Westerham 2 (DE); Pfleiderer, Hans-Jörg, Prof.Dr., D-8011 Zorneding (DE)

(56) Entgegenhaltungen:
- EP-A- 0 100 511
- EP-A- 0 137 386
- GB-A- 1 427 519
- US-A- 4 660 166
- IEEE FIRST INTERNATIONAL CONFERENCE ON NEURAL NETWORKS, San Diego, California, 21.-24. Juni 1987, Seiten III/403-410, IEEE, New York, US; A. AGRANAT et al.: "A new architecture for a microelectronic implementation of neural network models"
- PROCEEDINGS OF THE TWENTY-SECOND ANNUAL ALLERTON CONFERENCE ON COMMUNICATION CONTROL, AND COMPUTING, Monticello, Illinois, 3.-5. Oktober 1984, Seiten 940-945; M.A. HADDAD et al.: "A systolic architecture based on adders for digital signal processor"
- L'ELECTRICITE ELECTRONIQUE MODERNE, Juni/Juli 1972, Seiten 21-25; B.H. MARIN: "Le neurone cybernétique"
- IEEE FIRST INTERNATIONAL CONFERENCE ON NEURAL NETWORKS, San Diego, California, 21.-24. Juni 1987, Seiten III/419-426, IEEE, New York, US; J.G. CLEARY: "A simple VLSI connectionist architecture"
- R. Lippmann: "An Introduction to Computing with Neural Nets", IEEE ASSP Magazine, April 1987, S. 4-22.

## Beschreibung

Die vorliegende Erfindung betrifft in integrierter Schaltungstechnik ausgeführte digitale neuronale Netze.

Künstliche neuronale Netze (im folgenden als KNN bezeichnet) sind prädestiniert für die parallele Verarbeitung sehr großer Datenmengen mit dem Ziel der Mustererkennung und -verarbeitung (beispielsweise von Sprache oder Bildern). Bekannte derartige KNN bestehen aus einer Vielzahl nichtlinearer Prozessorelemente (Neuronen), die über variable "Gewichtsfaktoren" miteinander vernetzt sind.

Für die Modellierung der Neuronen sind in der Literatur folgende nichtlineare Übertragungscharakteristiken vorgeschlagen worden, vergl. R. P. Lippmann: "An introduction to computing with neural nets" IEEE ASSP Magazine, April 1987, S. 4...'22:
- binäre Entscheider,
- lineare Rampenfunktion mit Sättigungscharakteristik,
- Sigmoidal-Funktion,
- Tangens-Hyperbolicus-Funktion.

Desweiteren existiert eine Vielzahl unterschiedlicher Strukturen für die Vernetzung der Neuronen (z.B. "Hopfield-Netz", "Hamming-Netz", "Perceptron", vergl. ebenfalls R.P. Lippmann. Eine unmittelbare digitale Realisierung großer derartiger Netze scheint mit den heutigen Technologien zur Herstellung integrierter Schaltungen wegen der erforderlichen Vielzahl von Neuronen ( > 1000) unmöglich zu sein. Das Hauptproblem dabei ist, daß die Zahl der Verbindungen und damit auch die Zahl der variablen Gewichtsfaktoren quadratisch mit der Zahl der Neuronen wächst. Beispielsweise sind bei 1000 Neuronen in einem vollständig vermaschten Netz 1 Millionen Gewichtungen erforderlich.

In der Literatur sind einige Realisierungen kleiner KNN mit beispielsweise 54 bzw. 256 Neuronen für ein programmierbares bzw. nicht-programmierbares Netz, vergl. H.P. Graf, P. de Vegvar: A CMOS associative memory chip based on neural networks. Proc. 1987 IEEE Int. Conf. on Solid-State Circuits, pp. 304, 305, 437;
H.P. Graf et al.: VLSI implementation of a neural network memory with several hundreds of neurons. AIP Conference Proceedings 151, "Neural Networks for Computing", S. 182-187, Snowbird, Utah, 1986;
W. Hubbard et. al. : Electronic neural networks. AIP Conference Proceedings 151, "Neural Networks for Computing", S. 227-234, Snowbird, Utah, 1986
und Realisierungsvorschläge, vergl. J.P. Sage, K. Thompson, R.S. Withers: An artificial neural network integrated circuit based on MNOS/CCD principles. AIP Conference Proceedings 151, "Neural Networks for Computing", S. 381-384, Snowbird, Utah, 1986, beschrieben. Dabei handelt es sich durchwegs um analoge Realisierungen von KNN. Gegenüber digitalen Realisierungen haben sie den Vorteil einer wesentlich kleineren Implementationsfläche. Nachteilig ist jedoch der hohe durch die erforderliche Widerstandsmatrix bedingte Stromverbrauch, der einer Realisierung von größeren, programmierbaren Netzen (mehr als einige hundert Neuronen) entgegensteht. Das Verhalten und die Eigenschaften der bisher vorgeschlagenen Modellierungen von KNN werden vornehmlich durch Simulation auf Vektorrechnern, Workstations oder speziellen Prozessorfeldern untersucht. Der grundsätzliche Nachteil dieses Weges besteht darin, daß die dem neuronalen Netz eigene (Raum-)Parallelität in der Verarbeitung der Information vollständig oder teilweise verloren geht und somit die Rechenzeit des simulierten Netzes insbesondere für große Neuronenverbände zu solchen Größenordnungen anwächst, daß eine zügige oder quasi-zeitechte Bearbeitung der zuvor genannten Aufgaben behindert oder unmöglich wird.

Eine wesentliche Verkürzung der Rechenzeit und einen sehr viel größeren Musterdurchsatz erhält man dagegen mit Hardware-Emulatoren. Im Gegensatz zu Hardware-Simulatoren enthalten sie ein künstliches neuronales Netz von kleiner Größe, mit dessen Hilfe ein größeres Netz emuliert werden kann.

Der Vorteil einer digitalen Realisierung eines KNN besteht neben einem höheren Durchsatz in der größeren Freiheit, mit der der Anwender netztypische Parameter (z.B. Diskriminatorfunktionen) auswählen und einstellen kann.

Die Anforderungen, die von den Anwendern derzeit an den Komplexitätsgrad (>1000) von allgemeinen neuronalen Netzen gestellt werden, übersteigen die Möglichkeiten heutiger VLSI-Integrationstechnik.

Neben diesen allgemeinen, relativ großen und komplexen neuronalen Netzen sind bereits Speziallösungen für bestimmte Aufgaben mit kleineren neuronalen Netzen vorgeschlagen worden. Diese vorgeschlagenen kleineren Netze sind zumeist als komplette Lösungen auf einem Chip in Analogtechnik mit den damit verbundenen Nachteilen realisiert.

Der vorliegenden Erfindung liegt die Aufgabe zugrunde, digitale Schaltungsanordnungen anzugeben, die mit einer kleinen Anzahl untereinander eng vermaschter neuronaler Elemente die Emulation großer künstlicher neuronaler Netze mit einer großen Zahl untereinander eng vermaschter Neuronen ermöglichen.

Diese Aufgabe wird durch digitale Schaltungsanordnungen nach einem der Ansprüche 1 bis 4 bzw. durch eine Zusammenschaltung derartiger Schaltungsanordnungen nach einem der Ansprüche 5 bis 7 gelöst.

Vorteilhafte Weiterbildungen der vorliegenden Erfindung sind durch die in den Unteransprüchen angegebenen Merkmale gekennzeichnet.

Im folgenden wird die Erfindung anhand mehrerer Figuren im einzelnen beschrieben.
- Fig. 1: zeigt die Grundstruktur eines neuronalen Netzes (Hopfield-Modell) mit vier Neuronen.
- Fig. 2: zeigt das Blockschaltbild eines neuronalen Elements mit binärer (0, +1)-Bewertung.
- Fig. 3: zeigt das Blockschaltbild eines neuronalen Elements mit ternärer (-1, 0, +1)-Bewertung.
- Fig. 4: zeigt das Blockschaltbild eines neuronalen Elements mit erweiterter Bewertung.
- Fig. 5: zeigt das Blockschaltbild eines neuronalen Netzes, bestehend aus einem einzigen Neuron mit serieller Abarbeitung.
- Fig. 6: zeigt das Blockschaltbild eines neuronalen Netzes mit serieller Akkumulation in den Neuronen dieses Netzes.
- Fig. 7: zeigt ein Prinzipschaltbild eines Einzelmoduls mit vier Neuronen.
- Fig. 8a, b, c: zeigen verschiedene Prinzipien der Anordnung und des Zusammenschaltens von Einzelmoduln zur Bildung von neuronalen Netzen verschiedener Größen.

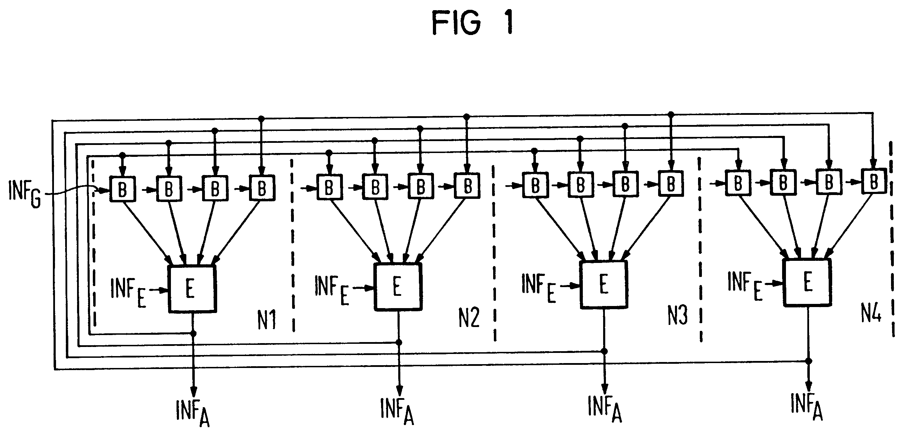

Wie bereits erläutert, zeigt Fig. 1 die Grundstruktur eines neuronalen Netzes mit vier Neuronen N1 ... N₄. Alle diese Neuronen sind vollständig miteinander vermascht. Bei den Neuronen N1 ... N₄ sind an den jeweils zugehörigen Bewertungstufen B und einer neuron-individuellen Entscheidungsstufe E individuelle Einstellmöglichkeiten vorhanden, wobei den Entscheidern ein Schwellwert und ein individuelles konstantes Eingangssignal und bei den Bewertern eine Gewichtungsinformation angelegt werden kann. Um Anschlußpunkte und damit Chipfläche zu sparen, werden diese individuellen Signale zumindest teilweise seriell in das Netz eingegeben, wobei diese individuellen Signale vollständig auf dem das neuronale Netz enthaltenden Chip abgespeichert werden können. Zur Realisierung eines digitalen neuronalen Netzes wird von folgenden Voraussetzungen ausgegangen:
- Die Eingangs/Ausgangswortbreite pro Neuron ist auf 1 Bit (binär) (1) festgelegt,
- die Wortbreite bei der Bewertung pro Neuron ist auf 1 Bit (binär) (2) festgelegt.

Im einzelnen ist für das digitale neuronale Netz vorgesehen, daß eine Vielzahl von vollständig miteinander vermaschten Neuronen vorgesehen sind, die jeweils eine Bewertungsstufe mit einer Vielzahl von Bewertern B, die gleich der Vielzahl der Neuronen ist, und eine Entscheidungsstufe mit einem Entscheider E aufweisen, daß jedem Entscheider E von einer vorverarbeitenden Einrichtung über einen Informationseingang eine Einstellinformation INF_{E} zuführbar ist, die eine bestimmte Voreinstellung des Entscheiders E bewirkt, daß jedem Bewerter B von einer vorverarbeitenden Einrichtung über einen individuellen Informationseingang eine Gewichtungsinformation INF_{G} zuführbar ist, daß von jedem Entscheider E jeweils über einen individuellen Informationsausgang eine Ausgangsinformation INF_{A} an eine nachverarbeitende Einrichtung ausgebbar ist, daß die Informationsausgänge der Entscheider E jeweils mit einem individuellen Verarbeitungseingang aller dem betreffenden Entscheider E zugeordneten Bewerter B verbunden sind und daß individuelle Verarbeitungsausgänge der Bewerter B mit individuellen Verarbeitungseingängen des Entscheiders E in dem betreffenden Neuron verbunden sind, so daß jede Ausgangsinformation INF_{A} mittelbar auf jedes Neuron N rückkoppelbar ist, vgl. Fig. 1.

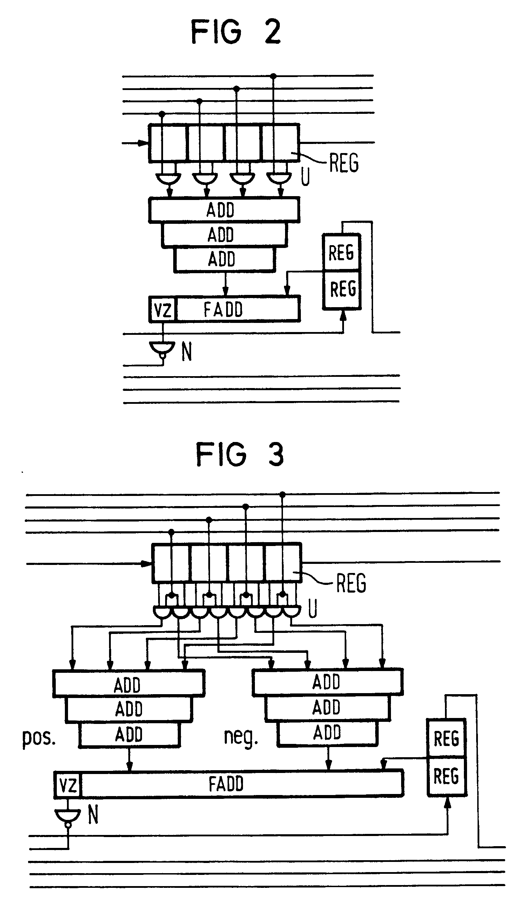

Fig. 2 zeigt eine Struktur, die erfindungsgemäß auf die zuvor angegebenen Voraussetzungen (1) und (2) anwendbar ist. In dieser Figur ist ein Neuron gezeigt, das aus einem neuronalen Element mit binärer (0, +1)-Bewertung besteht, wobei das Element ein Schieberegister mit einer der Anzahl von Neuronen in dem neuronalen Netz entsprechenden Anzahl von Registerzellen REG mit einem seriellen Eingang zur seriellen Eingabe von Bewertungsdaten enthält. Jeder Registerzelle REG ist ein Verknüpfungsglied U mit zwei Signaleingängen zugeordnet, dessen einer Signaleingang mit einem Ausgang der betreffenden Registerzelle REG verbunden ist, dessen anderer Signaleingang mit dem Informationsausgang des Entscheiders des zugeordneten Neurons verbunden ist und dessen Signalausgang mit einem individuellen Eingang eines Addierbaums mit mehreren kaskadenartig angeordneten Addierern ADD verbunden ist, dessen Ausgänge mit entsprechenden Eingängen eines Endaddierers FADD verbunden sind. Dem Endaddierer FADD sind aus einem Schwellwertregister mit Registerzellen REG, REG, in das von der vorverarbeitenden Einrichtung serielle Schwellwertdaten eingebbar sind, die so gespeicherten Schwellwertdaten über einen weiteren Eingang zuführbar. Der Endaddierer FADD liefert als Vorzeichenschalter das Vorzeichensignal VZ, das beispielsweise den Signalwert "0" für eine positive Summe und den Signalwert "1" für eine negative Summe hat, in Abhängigkeit von der Größe der in dem Endaddierer FADD berechneten Datensumme. Diesem Vorzeichenschalter ist ein NICHT-Glied N nachgeordnet. Der Ausgang des NICHT-Glieds N bildet den Informationsausgang des Entscheiders, der auf die Verarbeitungseingänge aller dem betreffenden Entscheider zugeordneten Bewerter, nämlich den anderen Signaleingang des betreffenden Verknüpfungs-Glieds U rückgekoppelt ist. Das Verknüpfungs-Glied U ist vorzugsweise ein UND-Glied.

In dem Register mit seriellem Eingang werden beispielsweise 50 binäre Bewertungen mit je einem Bit abgespeichert. Die Registerinhalte werden mit dem jeweiligen Eingangssignal von den beispielsweise 50 vorgesehenen Neuronen UND-verknüpft und dann in dem Addierbaum, der beispielsweise ein Wallace-Addierer ist, aufaddiert. Bei 50 (gleichwertigen) Eingängen weist der Addierer einschließlich des Endaddierers ca. 50 Volladdierer auf. In diesen Addierer wird zu Beginn jeder Berechnung der Schwellwert in Form einer negativen Zahl eingegeben. Ist die Summe der (positiven) Eingangssignale größer als dieser Schwellwert, so wird das Vorzeichen VZ des Endaddierers beispielsweise auf "0" gesetzt und damit der Ausgang des Neurons auf "1" geschaltet. Der Schwellwert ist in dem vorzugsweise 6 Bit breiten Register abgespeichert. Ein derartiges Neuron hat bei Anwendung der 1.5 µm - Technologie einen Platzbedarf von etwa 0.8 mm² bzw. bei Anwendung der 1.0 µm-Technologie einen Platzbedarf von etwa 0.4 mm², und man benötigt einen zusätzlichen Platzbedarf von ca. 5 mm² bzw. 2.5 mm² für die Gesamtverdrahtung eines Netzes mit 50 Neuronen. Die mögliche Zyklusfrequenz dieser Anordnung beträgt etwa 40 MHz bzw. 80 MHz.

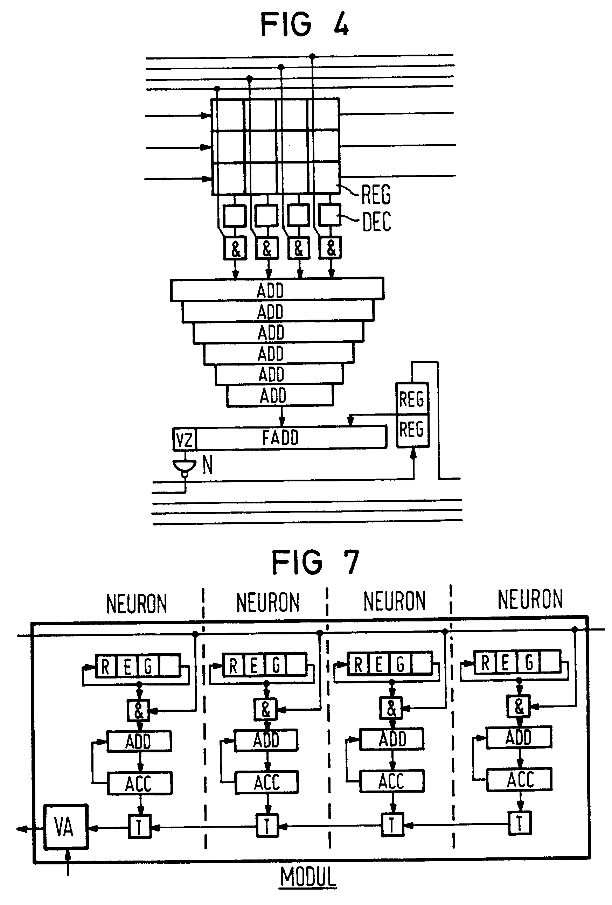

Fig. 4 zeigt die Struktur eines neuronalen Elements mit erweiterter Bewertung. Im einzelnen zeigt Fig. 4, daß das Neuron aus einem neuronalen Element mit binären Ausgangssignalen besteht, das n, vorzugsweise n = 3, parallel zueinander angeordnete Schieberegister mit jeweils einer der Anzahl von Neuronen in dem neuronalen Netz entsprechenden Anzahl von Registerzellen REG mit jeweils einem seriellen Eingang zur codierten seriellen Eingabe von Bewertungsdaten enthält, so daß dem neuronalen Element 2ⁿ Bewertungsgrade, vorzugsweise die Bewertungsgrade 0, 1, 2, 4, 8, 16, 32, 64, eingebbar sind (dabei ist auch eine Bewertung mit positiven und negativen Vorzeichen, z.B. -4, -2, -1, 0, +1, +2, +4, +8 möglich). Jeder Registerzelle REG ist eine Verknüpfungseinrichtung & mit ersten und zweiten Signaleingängen zugeordnet, wobei die ersten Signaleingänge mit Ausgängen eines den jeweils betreffenden Registerzellen REG zugeordneten Decoders DEC verbunden sind, wobei der zweite Signaleingang mit dem Informationsausgang des Entscheiders des zugeordneten Neurons verbunden ist und wobei die Signalausgänge der Verknüpfungs-Einrichtung mit individuellen Eingängen eines Addierbaums mit einer Vielzahl kaskadenartig angeordneter Addierer ADD verbunden sind, dessen Ausgänge mit entsprechenden Eingängen eines Endaddierers FADD verbunden sind. Dem Endaddierer FADD sind aus einem Schwellwertregister mit Registerzellen REG, REG, in das von der vorverarbeitenden Einrichtung serielle Schwellwertdaten eingebbar sind, die so gespeicherten Schwellwertdaten über einen weiteren Eingang zuführbar. Der Endaddierer FADD liefert als Vorzeichenschalter das Vorzeichensignal VZ in Abhängigkeit von der Größe der in dem Endaddierer FADD berechneten Datensumme. Dem Vorzeichenschalter ist ein NICHT-Glied nachgeordnet. Der Ausgang des NICHT-Glieds bildet den Informationsausgang des Entscheiders, der auf die Verarbeitungseingänge aller dem betreffenden Entscheider zugeordneten Bewerter, nämlich den zweiten Signaleingängen betreffenden Verknüpfungs-Glieder &, rückgekoppelt ist. Die Verknüpfungs-Glieder sind vorzugsweise als UND-Glieder ausgeführt.

Fig. 3 zeigt die Struktur eines neuronalen Elements mit ternärer (-1, 0, +1)-Bewertung, das ein Schieberegister mit einer der Anzahl von Neuronen in dem neuronalen Netz entsprechenden Anzahl von Registerzellen REG mit einem seriellen Eingang zur seriellen Eingabe von Bewertungsdaten enthält. Jeder Registerzelle REG sind zwei Verknüpfungs-Glieder mit jeweils zwei Signaleingängen zugeordnet, deren erste Signaleingänge jeweils mit einem Ausgang der betreffenden Registerzelle REG verbunden sind, deren zweite Signaleingänge gemeinsam mit dem Informationsausgang des Entscheiders des zugeordneten Neurons verbunden sind und deren Signalausgänge jeweils mit individuellen Eingängen eines ersten Addierbaums mit mehreren kaskadenartig angeordneten Addierern ADD für positiv bewertete Signale bzw. eines zweiten Addierbaums mit mehreren kaskadenartig angeordneten Addierern ADD für negativ bewertete Signale verbunden sind, wobei die Ausgänge dieser Addierbäume mit entsprechenden Eingängen eines Endaddierers FADD verbunden sind. Dem Endaddierer FADD sind aus einem Schwellwertregister mit Registerzellen REG, REG, in das von der vorverarbeitenden Einrichtung serielle Schwellwertdaten eingebbar sind, die so gespeicherten Schwellwertdaten über einen weiteren Eingang zuführbar. Der Endaddierer FADD liefert als Vorzeichenschalter das Vorzeichensignal VZ in Abhängigkeit von der Größe der in dem Endaddierer FADD berechneten Datensumme. Dem Vorzeichenschalter ist ein NICHT-Glied N nachgeordnet. Der Ausgang des NICHT-Glieds N bildet den Informationsausgang des Entscheiders, der auf die Verarbeitungseingänge aller den betreffenden Entscheider zugeordneten Bewerter, nämlich den anderen Signaleingang der betreffenden Verknüpfungs-Glieder U rückgekoppelt ist. Die Verknüpfungs-Glieder sind vorzugsweise als UND-Glieder ausgeführt.

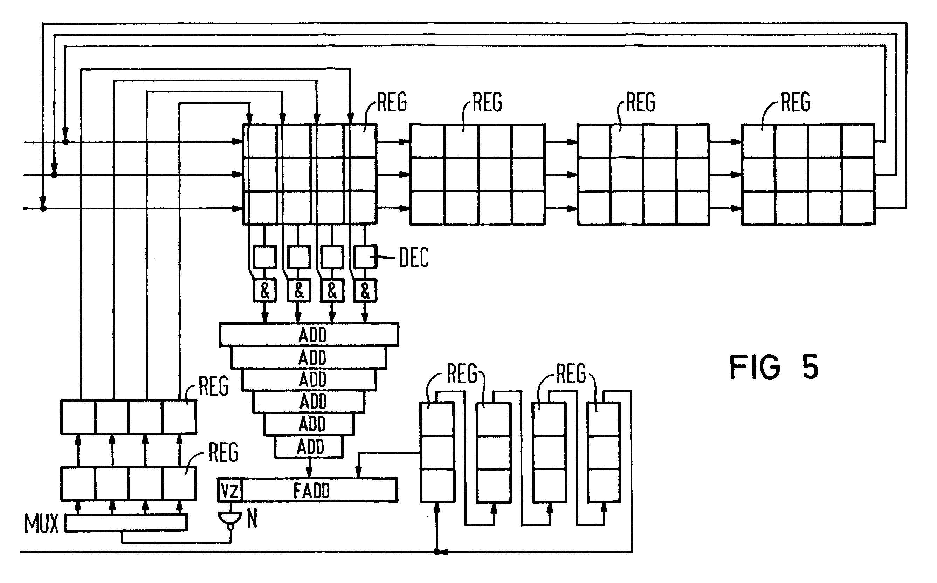

Fig. 5 zeigt ein neuronales Netz, das ein einziges Neuron enthält, welches aus einem neuronalen Element mit binärem Ausgangssignal besteht, das n, vorzugsweise n = 3, parallel zueinander angeordnete Schieberegister-Abschnitte mit jeweils einer der Anzahl von Neuron-Funktionen in dem neuronalen Netz entsprechenden Anzahl von Registerzellen REG mit jeweils einem seriellen Eingang zur codierten seriellen Eingabe von Bewertungsdaten enthält, so daß dem neuronalen Element 2ⁿ Bewertungsgrade, vorzugsweise die Bewertungsgrade 0, 1, 2, 4, 8, 16, 32, 64 eingebbar sind. Die dem einzigen Neuron zugeordneten Schieberegister-Abschnitte sind entsprechend der Anzahl der Neuron-Funktionen mehrfach vorgesehen und miteinander in Reihenschaltung und eine Schleife bildend angeordnet. Jeder Registerzelle REG ist eine Verknüpfungseinrichtung & mit ersten und zweiten Signaleingängen zugeordnet, wobei die ersten Signaleingänge mit Ausgängen eines den jeweils betreffenden Registerzellen REG zugeordneten Decoders DEC verbunden sind, wobei der zweite Signaleingang mittelbar mit dem Informationsausgang des Entscheiders des Neurons verbunden ist und wobei die Signalausgänge der Verknüpfungs-Einrichtung mit individuellen Eingängen eines Addierbaums mit einer Vielzahl kaskadenartig angeordneter Addierer ADD verbunden sind, dessen Ausgänge mit entsprechenden Eingängen eines Endaddierers FADD verbunden sind. Dem Endaddierer FADD sind aus einem Schwellwertregister mit Registerzellen REG, in das von der vorverarbeitenden Einrichtung serielle Schwellwertdaten eingebbar sind, die so gespeicherten Schwellwertdaten über einen weiteren Eingang zuführbar, wobei die Registerzellen REG des Schwellwertregisters in eine Anzahl von Abschnitten unterteilt sind, die der Anzahl der Neuron-Funktionen entspricht. Der Endaddierer FADD liefert als Vorzeichenschalter das Vorzeichensignal VZ in Abhängigkeit von der Größe der in dem Endaddierer FADD berechneten Datensumme.

Diesem Vorzeichenschalter ist ein NICHT-Glied N nachgeordnet. Der Ausgang des NICHT-Glieds N bildet den Informationsausgang des Entscheiders, der auf die Verarbeitungseingänge aller dem betreffenden Entscheider zugeordneten Bewerter, nämlich den zweiten Signaleingängen der betreffenden Verknüpfungs-Glieder & mittelbar rückgekoppelt ist, wobei zwischen den Ausgang des NICHT-Glieds N und die zweiten Signaleingänge eine über einen Multiplexer MUX ansteuerbare, vorzugsweise zweistufige Registeranordnung mit der Anzahl der Neuron-Funktionen entsprechender Anzahl von Registerzellen REG je Registeranordnungs-Stufe eingefügt ist.

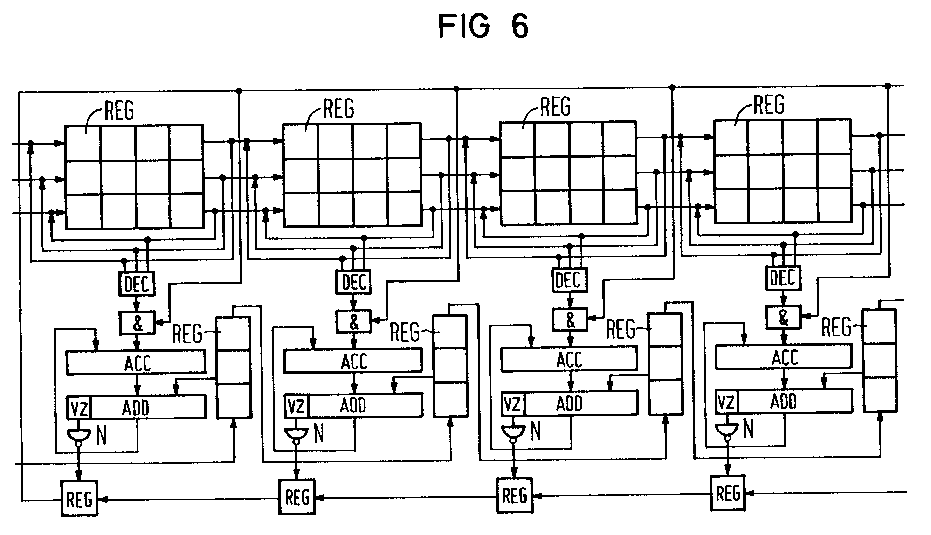

Fig. 6 zeigt ein neuronales Netz mit serieller Akkumulation in den Neuronen. In dieser Struktur ist vorgesehen, daß das Neuron jeweils aus einem neuronalen Element mit binärem Ausgangssignal besteht, das n, vorzugsweise n = 3, parallel zueinander angeordnete Schieberegister-Abschnitte mit jeweils einer der Anzahl von Neuron-Funktionen in dem neuronalen Netz entsprechenden Anzahl von Registerzellen REG mit jeweils einem seriellen Eingang zur codierten seriellen Eingabe von Bewertungsdaten enthält, so daß dem neuronalen Element 2ⁿ Bewertungsgrade, vorzugsweise die Bewertungsgrade 0, 1, 2, 4, 8, 16, 32, 64 eingebbar sind. Die Ausgänge der dem Neuron zugeordneten Schieberegister-Abschnitte sind jeweils auf deren Eingänge rückgekoppelt. Allen dem neuronalen Element zugeordneten Registerzellen REG ist eine Verknüpfungseinrichtung & mit ersten und zweiten Signaleingängen zugeordnet, wobei die ersten Signaleingänge mit Ausgängen eines den Registerzellen REG zugeordneten Decoders DEC verbunden sind, wobei der zweite Signaleingang mittelbar mit dem Informationsausgang des Entscheiders des Neurons verbunden ist und wobei die Signalausgänge der Verknüpfungseinrichtung mit individuellen Eingängen eines Akkumulators ACC verbunden sind, dessen Ausgänge mit entsprechenden Eingängen eines Addierers ADD verbunden sind. Dem Addierer ADD sind aus einem Schwellwertregister mit Registerzellen REG, in das von der vorverarbeitenden Einrichtung serielle Schwellwertdaten eingebbar sind, die so gespeicherten Schwellwertdaten über einen weiteren Eingang zuführbar, wobei die Registerzellen REG des Schwellwertregisters in einer Anzahl von Abschnitten unterteilt sind, die der Anzahl der neuronalen Elemente entspricht. Der Addierer ADD liefert als Vorzeichenschalter das Vorzeichensignal VZ in Abhängigkeit von der Größe der in dem Addierer ADD berechneten Datensumme. Diesem Vorzeichenschalter ist ein NICHT-Glied N nachgeordnet. Der Ausgang des NICHT-Glieds N bildet den Informationsausgang des Entscheiders, der auf die Verarbeitungseingänge aller dem betreffenden Entscheider zugeordneten Bewerter, nämlich den zweiten Signaleingängen der betreffenden Verknüpfungsglieder & mittelbar rückgekoppelt ist, wobei zwischen den Ausgang des NICHT-Glieds N und die zweiten Signaleingänge ein Ausgangsregister mit einer Anzahl von Registerzellen REG, die der Anzahl der neuronalen Elemente entspricht, eingefügt ist. Jedesmal dann, wenn aus dem Ausgangsspeicher ein neuer Signalwert an den zweiten Signaleingang der Verknüpfungsglieder gelegt wird, wird in dem jeweils den neuronalen Elementen zugeordneten Registerzellen REG die Information zyklisch um eine Stelle verschoben und dieser neue Wert decodiert, so daß jeder Signalwert mit einer anderen Information bewertet werden kann.

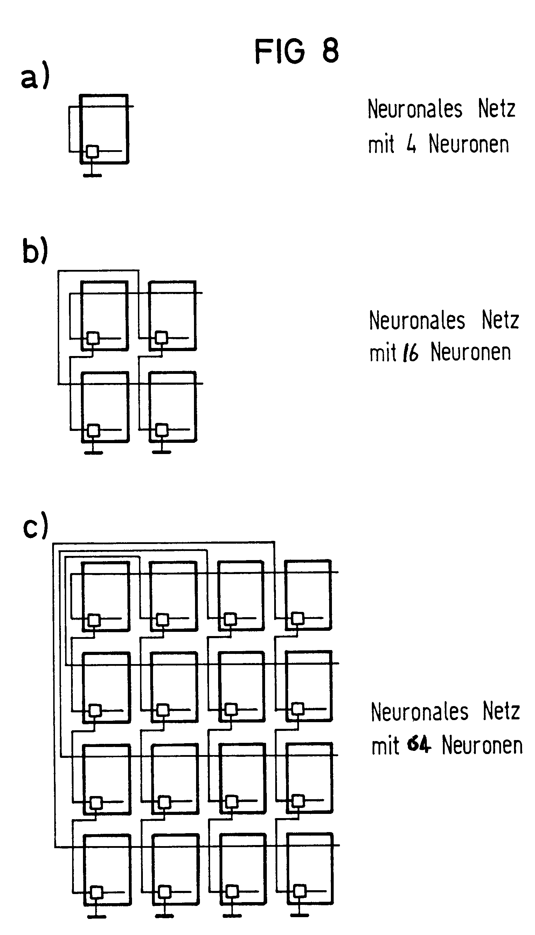

Fig. 7 zeigt eine Prinzipdarstellung eines Einzelmoduls mit vier Neuronen. Jedes Neuron NR enthält ein Schieberegister mit einer der Anzahl der Neuronen NR entsprechenden Anzahl von Registerzellen, nämlich vier, wobei der Ausgang der vierten Registerzelle mit dem Eingang der ersten Registerzelle verbunden ist. Außerdem ist eine UND-Verknüpfungseinrichtung & vorgesehen, deren erster Signaleingang mit dem Ausgang der vierten Registerzelle verbunden ist, deren zweiter Signaleingang mittelbar mit dem Ausgang eines Volladdierers VA verbunden ist und deren Signalausgang mit einem Addierer ADD verbunden ist, dessen Summenausgang mit dem Eingang eines Akkumulators ACC verbunden ist. Der Ausgang des Akkumulators ACC ist mit einem zweiten Eingang des Addierers ADD verbunden. Ein paralleler Ausgang des Akkumulators ACC ist mit den Setzeingängen einer Anzahl von Registerzellen T, wobei die Anzahl der Bitbreite des Akkumulators ACC entspricht, eines Schieberegisters verbunden, das entsprechend der Anzahl der Neuronen N eine Anzahl von Registereinheiten T, nämlich vier, enthält, wobei der Ausgang dieses Schieberegisters mit dem Eingang des Volladdierers VA verbunden ist. Ein zweiter Eingang des Volladdierers VA ist mit einem bestimmten Potential, vorzugsweise Erdpotential = logisch Null, beaufschlagt, sofern für ein neuronales Netz nur ein einziger Modul vorgesehen ist.

Fig. 8a zeigt eine schematische Darstellung eines neuronalen Netzes mit vier Neuronen, das aus einem einzigen Modul gemäß Fig. 7 besteht.

Fig. 8b zeigt ein neuronales Netz, das aus vier Moduln gemäß Fig. 7 gebildet ist, wobei die Moduln in quadratischer Form angeordnet sind und vorzugsweise die zweiten Eingänge der Volladdierer VA der zwei unteren Moduln auf einem bestimmten Potential, vorzugsweise Erdpotential = logisch Null, liegen und die zweiten Eingänge der Volladdierer VA der zwei oberen Moduln jeweils mit dem Summenausgang des Volladdierers des jeweils darunter angeordneten Moduls verbunden sind.

Fig. 8c zeigt schließlich eine schematische Darstellung eines neuronalen Netzes mit 64 Neuronen, das gemäß dem in Fig. 8b gezeigten Prinzip 16 Moduln in quadratischer Form angeordnet enthält.

Vorzugsweise sind die Schaltkreise der Neuronen sowie deren Hilfsschaltkreise in 1.5 µm-CMOS-Technologie ausgeführt. Eine andere bevorzugte Version sieht vor, daß die Schaltkreise der Neuronen und deren Hilfsschaltkreise in 1.0 µm-CMOS-Technologie ausgeführt sind.

Die Schaltkreise der Neuronen und deren Hilfsschaltkreise können in einem einzigen Chip ausgebildet sein, wobei zur Bildung großer neuronaler Netze mehrere dieser Chips auf einer Platine mit entsprechender Verdrahtung oder Leiterbahnführung zur Verbindung der Chips miteinander angeordnet sind. Erfindungsgemäß ist auch vorgesehen, daß alle erforderlichen Schaltkreise auf einem einzigen Wafer ausgebildet sind.

## Patentansprüche

1. Digitale Schaltungsanordnung entsprechend einem neuronalen Element mit binärer Gewichts-Bewertung (0,1) zum Aufbau digitaler Schaltungen zur Emulation neuronaler Netze mit folgenden Merkmalen:
a) es ist ein Schieberegister mit einer der Anzahl von Neuronen in einem neuronalen Netz entsprechenden Anzahl von Registerzellen (REG) mit einem seriellen Eingang zur seriellen Eingabe von Gewichts-Bewertungsdaten vorgesehen;
b) jeder Registerzelle (REG) ist ein Verknüpfungsglied (U) mit zwei Signaleingängen zugeordnet, deren einer Signaleingang mit einem Ausgang der betreffenden Registerzelle (REG) verbunden ist, deren anderer Signaleingang mit einem Eingang des neuronalen Elements verbunden ist, und dessen Signalausgang mit einem individuellen Eingang eines Addiererbaums mit mehreren kaskadenartig angeordneten Addierern (ADD) verbunden ist, dessen Ausgänge mit entsprechenden Eingängen eines Endaddierers (FADD) verbunden sind;
c) es ist ein Schwellwertregister mit Registerzellen (REG) vorgesehen, in das Schwellwertdaten seriell eingegeben werden können, die dem Endaddierer (FADD) über einen weiteren Eingang zugeführt werden können;
d) der Endaddierer (FADD) umfaßt einen Vorzeichenschalter (VZ), der ein Vorzeichensignal in Abhängigkeit von der Größe der in dem Endaddierer (FADD) berechnenetn Datensumme liefert;
e) dem Vorzeichenschalter (VZ) ist ein NICHT-Glied (N) nachgeordnet, dessen Ausgang den Ausgang des neuronalen Elements bildet.

2. Digitale Schaltungsanordnung entsprechend einem neuronalen Element mit ternärer Gewichts-Bewertung (-1,0,+1) zum Aufbau digitaler Schaltungen zur Emulation neuronaler Netze mit folgenden Merkmalen:
a) es ist ein Schieberegister mit einer der Anzahl von Neuronen in einem neuronalen Netz entsprechenden Anzahl von Registerzellen (REG) mit einem seriellen Eingang zur seriellen Eingabe von Gewichts-Bewertungsdaten vorgesehen;
b) jeder Registerzelle (REG) sind zwei Verknüpfungsglieder (U) mit jeweils zwei Signaleingängen zugeordnet, deren einer Signaleingang mit einem Ausgang der betreffenden Registerzelle (REG) verbunden ist, deren anderer Signaleingang mit einem Eingang des neuronalen Elements verbunden ist, und deren Signalausgänge jeweils mit einem individuellen Eingang eines ersten Addiererbaums mit mehreren kaskadenartig angeordneten Addierern (ADD) für positiv bewertete Signale bzw. eines zweiten Addiererbaums mit mehreren kaskadenartig angeordneten Addierern (ADD) für negativ bewertete Signale verbunden sind, wobei die Ausgänge dieser Addiererbäume mit entsprechenden Eingängen eines Endaddierers (FADD) verbunden sind;
c) es ist ein Schwellwertregister mit Registerzellen (REG) vorgesehen, in das Schwellwertdaten seriell eingegeben werden können, die dem Endaddierer (FADD) über einen weiteren Eingang zugeführt werden können;
d) der Endaddierer (FADD) umfaßt einen Vorzeichenschalter (VZ), der ein Vorzeichensignal in Abhängigkeit von der Größe der in dem Endaddierer (FADD) berechnenetn Datensumme liefert;
e) dem Vorzeichenschalter (VZ) ist ein NICHT-Glied (N) nachgeordnet, dessen Ausgang den Ausgang des neuronalen Elements bildet.

3. Digitale Schaltungsanordnung entsprechend einem neuronalen Element mit erweiterter Gewichts-Bewertung zum Aufbau digitaler Schaltungen zur Emulation neuronaler Netze mit folgenden Merkmalen:
a) es ist ein Satz n parallel angeordneter Schieberegister mit jeweils einer der Anzahl von Neuronen in einem neuronalen Netz entsprechenden Anzahl von Registerzellen (REG) mit seriellen Eingängen zur seriellen Eingabe von Gewichts-Bewertungsdaten vorgesehen, so daß dem neuronalen Element 2ⁿ Bewertungsgrade eingebbar sind;
b) jeder Stufe von Registerzellen (REG) ist ein Verknüpfungsglied (&) mit zwei Signaleingängen zugeordnet, deren einer Signaleingang über einen Decoder (DEC) mit einem Ausgang einer ausgewählten Registerzelle (REG) dieser Stufe verbunden ist, deren anderer Signaleingang mit einem Eingang des neuronalen Elements verbunden ist, und dessen Signalausgang mit einem individuellen Eingang eines Addiererbaums mit mehreren kaskadenartig angeordneten Addierern (ADD) verbunden ist, dessen Ausgänge mit entsprechenden Eingängen eines Endaddierers (FADD) verbunden sind;
c) es ist ein Schwellwertregister mit Registerzellen (REG) vorgesehen, in das Schwellwertdaten seriell eingegeben werden können, die dem Endaddierer (FADD) über einen weiteren Eingang zugeführt werden können;
d) der Endaddierer (FADD) umfaßt einen Vorzeichenschalter (VZ), der ein Vorzeichensignal in Abhängigkeit von der Größe der in dem Endaddierer (FADD) berechnenetn Datensumme liefert;
e) dem Vorzeichenschalter (VZ) ist ein NICHT-Glied (N) nachgeordnet, dessen Ausgang den Ausgang des neuronalen Elements bildet.

4. Digitale Schaltungsanordnung entsprechend einem neurona len Element nach einem der vorhergehenden Ansprüche, deren Verknüpfungsglied ein UND-Glied ist.

5. Digitale Schaltungsanordnung zur Emulation neuronaler Netze mit einer Vielzahl neuronaler Elemente, die durch Zusammenschaltung mehrerer digitaler Schaltungsanordnungen nach einem der vorhergehenden Ansprüche aufgebaut ist.

6. Digitale Schaltungsanordnung nach Anspruch 5, dadurch gekennzeichnet,
- daß eine Vielzahl von vollständig miteinander vermaschten Neuronen (Nr) vorgesehen sind, die jeweils eine Gewichts-Bewertungsstufe mit einer Vielzahl von Bewertern (B), die gleich der Vielzahl der Neuronen (N) ist, und eine Entscheidungsstufe mit einem Entscheider (E) aufweisen,
- daß jedem Entscheider (E) von einer vorverarbeitenden Einrichtung über einen Informationseingang eine Einstellinformation (INF_{E}) zuführbar ist, die eine bestimmte Voreinstellung des Entscheiders (E) bewirkt,
- daß jedem Bewerter (B) von einer vorverarbeitenden Einrichtung über einen individuellen Informationseingang eine Gewichtungsinformation (INF_{G}) zuführbar ist,
- daß von jedem Entscheider (E) jeweils über einen individuellen Informationsausgang eine Ausgangsinformation (INF_{A}) an eine nachverarbeitende Einrichtung ausgebbar ist,
- daß die Informationsausgänge der Entscheider (E) jeweils mit einem individuellen Verarbeitungseingang aller dem betreffenden Entscheider (E) zugeordneten Bewerter (B) verbunden sind und
- daß individuelle Verarbeitungsausgänge der Bewerter (B) mit individuellen Verarbeitungseingängen des Entscheiders (E) in dem betreffenden Neuron (N) verbunden sind, so daß jede Ausgangsinformation (INF_{A}) mittelbar auf jedes Neuron (NR) rückkoppelbar ist (Fig. 1).

7. Digitale Schaltungsanordnung zur Emulation neuronaler Netze mit einer Vielzahl neuronaler Elemente, und einer Anzahl Neuron-Funktionen die durch Zusammenschaltung einer digitalen Schaltungsanordnung nach einem der Ansprüche 1 bis 4 mit einer Kombination von Schiebe-Register-Abschnitten (REG) und / oder Multiplexern (MUX) aufgebaut ist, wobei die dem Neuron Zugeordneten Schiebe-Register-Abschnitte entsprechend der Anzahl der Neuron-Funktionen mehrfach vorgesehen und miteinander in Reihenschaltung und eine Schleife bildend angeordnet sind, und wobei zwischen den Ausgang des NICHT-Gliedes (N) und die zweiten Signaleingänge der Verknüpfungsglieder eine über Multiplexer (MUX) ansteuerbare Registeranordnung mit einer der Anzahl der Neuron-Funktionen entsprechenden Anzahl von Registerzellen (REG) eingefügt ist.

## Claims

1. Digital circuit arrangement corresponding to a neural element with binary weighting evaluation (0, 1) for the construction of digital circuits for emulating neural networks having the following features:
a) a shift register having a number of register cells (REG) corresponding to the number of neurons in a neural network with a serial input for the serial input of weighting evaluation data is provided;
b) assigned to each register cell (REG) is a logic element (U) with two signal inputs, one signal input of which is connected to an output of the appertaining register cell (REG), the other signal input of which is connected to an input of the neural element, and the signal output of which is connected to an individual input of an adder tree having a plurality of adders (ADD) arranged in cascade fashion, the outputs of which adders are connected to corresponding inputs of a final adder (FADD);
c) a threshold register having register cells (REG) is provided, into which threshold data can be input serially, which data can be supplied to the final adder (FADD) via a further input;
d) the final adder (FADD) comprises an operational sign switch (VZ) which supplies an operational sign signal depending on the size of the data sum calculated in the final adder (FADD);
e) the operational sign switch (VZ) is followed by a NOT element (N), the output of which forms the output of the neural element.

2. Digital circuit arrangement corresponding to a neural element with ternary weighting evaluation (-1, 0, +1) for the construction of digital circuits for emulating neural networks having the following features:
a) a shift register having a number of register cells (REG) corresponding to the number of neurons in a neural network with a serial input for the serial input of weighting evaluation data is provided;
b) assigned to each register cell (REG) are two logic elements (U) with two signal inputs in each case, one signal input of which is connected to an output of the appertaining register cell (REG), the other signal input of which is connected to an input of the neural element, and the signal outputs of which are connected in each case to an individual input of a first adder tree having a plurality of adders (ADD) arranged in cascade fashion for positively evaluated signals, or of a second adder tree having a plurality of adders (ADD) arranged in cascade fashion for negatively evaluated signals, the outputs of said adder trees being connected to corresponding inputs of a final adder (FADD);
c) a threshold register having register cells (REG) is provided, into which threshold data can be input serially, which data can be supplied to the final adder (FADD) via a further input;
d) the final adder (FADD) comprises an operational sign switch (VZ) which supplies an operational sign signal depending on the size of the data sum calculated in the final adder (FADD);
e) the operational sign switch (VZ) is followed by a NOT element (N), the output of which forms the output of the neural element.

3. Digital circuit arrangement corresponding to a neural element with extended weighting evaluation for the construction of digital circuits for emulating neural networks having the following features:
a) a set n of shift registers arranged in parallel having in each case a number of register cells (REG) corresponding to the number of neurons in a neural network with serial inputs for the serial input of weighting evaluation data is provided so that 2ⁿ evaluation degrees can be input into the neural element;
b) assigned to each stage of register cells (REG) is a logic element (&) with two signal inputs, one signal input of which is connected to an output of a selected register cell (REG) of said stage via a decoder (DEC), the other signal input of which is connected to an input of the neural element, and the signal output of which is connected to an individual input of an adder tree having a plurality of adders (ADD) arranged in cascade fashion, the outputs of which adder tree are connected to corresponding inputs of a final adder (FADD);
c) a threshold register having register cells (REG) is provided, into which threshold data can be input serially, which data can be supplied to the final adder (FADD) via a further input;
d) the final adder (FADD) comprises an operational sign switch (VZ) which supplies an operational sign signal depending on the size of the data sum calculated in the final adder (FADD);
e) the operational sign switch (VZ) is followed by a NOT element (N), the output of which forms the output of the neural element.

4. Digital circuit arrangement corresponding to a neural element according to one of the preceding claims, the logic element of which is an AND element.

5. Digital circuit arrangement for emulating neural networks having a plurality of neural elements which is constructed from the interconnection of a plurality of digital circuit arrangements according to one of the preceding claims.

6. Digital circuit arrangement according to Claim 5, characterized
- in that a plurality of neurons (Nr) completely meshed with one another is provided, which have in each case a weighting evaluation stage with a plurality of evaluators (B) equal to the plurality of neurons (N), and a decision stage with a decision unit (E),
- in that setting information (INF_{E}) which brings about a defined pre-setting of the decision unit (E) can be supplied to each decision unit (E) by a pre-processing means via an information input,
- in that weighting information (INF_{G}) can be supplied to each evaluator (B) by a pre-processing means via an individual information input,
- in that output information (INF_{A}) can be output to a post-processing means by each decision unit (E) via an individual information output in each case,
- in that the information outputs of the decision units (E) are connected in each case to an individual processing input of all evaluators (B) assigned to the appertaining decision unit (E), and
- in that individual processing outputs of the evaluators (B) are connected to individual processing inputs of the decision unit (E) in the appertaining neuron (N) so that each output information item (INF_{A}) can be fed back indirectly to each neuron (NR) (Fig. 1).

7. Digital circuit arrangement for emulating neural networks having a plurality of neural elements and a number of neural functions which is constructed from the interconnection of a digital circuit arrangement according to one of claims 1 to 4 with a combination of shift register sections (REG) and/or multiplexers (MUX), in which the shift register sections assigned to the neuron are provided multiply in accordance with the number of neural functions and are arranged in series with one another to form a loop, and in which a register arrangement that can be selected via multiplexers (MUX) and has a number of register cells (REG) corresponding to the number of neural functions is inserted between the output of the NOT element (N) and the second signal inputs of the logic elements.

## Revendications

1. Montage numérique correspondant à un élément neuronal à pondération binaire (0,1) pour former des circuits numériques pour l'émulation de réseaux neuronaux, présentant les caractéristiques suivantes :
a) il est prévu un registre à décalage comportant un nombre, qui correspond au nombre de neurones dans un réseau neuronal, de cellules de registre (REG) comportant une entrée série permettant l'introduction en série de données de pondération;
b) à chaque cellule de registre (REG) est associé un circuit combinatoire (U) comportant deux entrées de signaux, dont une entrée est reliée à une sortie de la cellule de registre (REG) concernée, dont l'autre entrée est reliée à une entrée de l'élément neuronal, et dont la sortie des signaux est reliée à une entrée individuelle d'un arbre additionneur comportant plusieurs additionneurs (ADD) qui sont montés en cascade et dont les sorties sont reliées à des entrées correspondantes d'un additionneur final (FADD);
c) il est prévu un registre à valeur de seuil qui comporte des cellules (REG) et dans lequel peuvent être introduites en série des données de valeur de seuil, qui peuvent être envoyées à l'additionneur final (FADD) par l'intermédiaire d'une autre entrée;
d) l'additionneur final (FADD) comprend un commutateur de signe (VZ), qui fournit un signal de signe en fonction de la grandeur de la somme de données calculée dans l'additionneur final (FADD);
e) en aval du commutateur de signe (VZ) est branché un circuit NON (N), dont la sortie constitue la sortie de l'élément neuronal.

2. Montage numérique correspondant à un élément neuronal à pondération ternaire ((-1,0,+1) pour former des circuits numériques pour l'émulation de réseaux neuronaux, présentant les caractéristiques suivantes :
a) il est prévu un registre à décalage comportant un nombre, qui correspond au nombre de neurones dans un réseau neuronal, de cellules de registre (REG) comportant une entrée série permettant l'introduction en série de données de pondération;
b) à chaque cellule de registre (REG) sont associés deux circuits combinatoires (U) comportant chacun deux entrées de signaux, dont une entrée est reliée à une sortie de la cellule du registre (REG) concernée, dont l'autre entrée est reliée à une entrée de l'élément neuronal, et dont les sorties des signaux sont reliées respectivement à une entrée individuelle d'un premier arbre additionneur comportant plusieurs additionneurs (ADD) branchés en cascade pour des signaux pondérés positivement, et d'un second arbre additionneur comportant plusieurs additionneurs (ADD) branchés en cascade pour des signaux pondérés négativement, les sorties de ces arbres additionneurs étant reliées à des entrées correspondantes d'un additionneur final (FADD);
c) il est prévu un registre à valeur de seuil qui comporte des cellules (REG) et dans lequel peuvent être introduites en série des données de valeur de seuil, qui peuvent être envoyées à l'additionneur final (FADD) par l'intermédiaire d'une autre entrée;
d) l'additionneur final (FADD) comprend un commutateur de signe (VZ), qui fournit un signal de signe en fonction de la grandeur de la somme de données calculée dans l'additionneur final (FADD);
e) en aval du commutateur de signe (VZ) est branché un circuit NON (N), dont la sortie constitue la sortie de l'élément neuronal.

3. Montage numérique correspondant à un élément neuronal à pondération étendue, pour former des circuits numériques pour l'émulation de réseaux neuronaux, présentant les caractéristiques suivantes :
a) il est prévu un ensemble de n registres à décalage branchés en parallèle et comportant chacun un nombre, qui correspond au nombre de neurones dans un réseau neuronal, de cellules de registre (REG), comportant des entrées en série pour l'introduction en série de données de pondération, de sorte que 2ⁿ degrés de pondération peuvent être introduits dans l'élément neuronal;
b) à chaque étage de cellules de registre (REG) est associé un circuit combinatoire (&) comportant deux entrées de signaux, dont une entrée de signaux est reliée, par l'intermédiaire d'un décodeur (DEC), à une sortie d'une cellule de registre (REG) sélectionnée de cet étage, dont l'autre entrée de signaux est reliée à une entrée de l'élément neuronal, et dont la sortie de signaux est reliée à une entrée individuelle d'un arbre additionneur comportant plusieurs additionneurs (ADD) branchés en cascade et dont les sorties sont reliées aux entrées correspondantes d'un additionneur final (FADD);
c) il est prévu un registre à valeur de seuil qui comporte des cellules (REG) et dans lequel peuvent être introduites en série des données de valeur de seuil, qui peuvent être envoyées à l'additionneur final (FADD) par l'intermédiaire d'une autre entrée;
d) l'additionneur final (FADD) comprend un commutateur de signe (VZ), qui fournit un signal de signe en fonction de la grandeur de la somme de données calculée dans l'additionneur final (FADD);
e) en aval du commutateur de signe (VZ) est branché un circuit NON (N), dont la sortie constitue la sortie de l'élément neuronal.

4. Montage numérique correspondant à un élément neuronal suivant l'une des revendications précédentes, dont le circuit combinatoire est un circuit ET.

5. Montage numérique pour l'émulation de réseaux neuronaux qui comporte un grand nombre d'éléments neuronaux, et qui est formé par l'interconnexion de plusieurs montages numériques suivant l'une des revendications précédentes.

6. Montage numérique suivant la revendication 5, caractérisé par le fait
- qu'il est prévu un grand nombre de neurones (Nr) maillés totalement entre eux, qui comportent respectivement un étage de pondération comportant une multiplicité de dispositifs de pondération (B), dont le nombre est égal à celui des neurones (N), et un étage de décision comportant un discriminateur (E),
- qu'à chaque discriminateur (E) peut être envoyée, par un dispositif de prétraitement, par l'intermédiaire d'une entrée d'informations, une information de réglage (INF_{E}), qui réalise un préréglage déterminé du discriminateur (E),
- qu'une information de pondération (INF_{G}) peut être envoyée à chaque dispositif de pondération (B) par un dispositif de prétraitement, par l'intermédiaire d'une entrée individuelle d'informations,
- qu'une information de sortie (INF_{A}) peut être envoyée par chaque discriminateur (E) à un dispositif réalisant un post-traitement, respectivement par l'intermédiaire d'une sortie individuelle d'informations,
- que les sorties d'informations des discriminateurs (E) sont reliées respectivement à une entrée individuelle de traitement de tous les dispositifs de pondération (B) associés au discriminateur (E) concerné, et
- que des sorties individuelles de traitement des dispositifs de pondération (B) sont reliées à des entrées individuelles de traitement du discriminateur (E), dans le neurone considéré (N), de sorte que chaque information de sortie (INF_{A}) peut être indirectement envoyée par contre-réaction à chaque neurone (NR) (figure 1).

7. Montage numérique pour l'émulation de réseaux neuronaux qui comporte un grand nombre d'éléments neuronaux et un certain nombre de fonctions neuronales, et qui est formé par l'interconnexion d'un montage numérique selon l'une des revendications 1 à 4 et d'une combinaison de sections de registre à décalage (REG) et/ou de multiplexeurs (MUX), et dans lequel les sections de registre à décalage associées au neurone sont prévues de façon multiple en un nombre correspondant à celui des fonctions neuronales et sont reliées entre elles selon un circuit série en formant une boucle, tandis qu'entre la sortie du circuit NON (N) et les secondes entrées de signaux des circuits combinatoires est inséré un dispositif formant registre, qui peut être commandé par l'intermédiaire de multiplexeurs (MUX) et qui comporte un nombre de cellules de registre (REG), qui correspond au nombre des fonctions neuronales.
